# EUROPÄISCHE PATENTSCHRIFT

(11) **EP 0 528 169 B1**
(45) Veröffentlichungstag und Bekanntmachung des Hinweises auf die Patenterteilung: **06.10.1999**
(21) Anmeldenummer: 92111872.5
(22) Anmeldetag: 13.07.1992
(51) Int. Cl.: C08F 220/32, C08F 220/28, C08F 212/08, C09D 125/14, C09D 133/14

(54) **Copolymerisatlösungen auf der Basis von Additionsprodukten alpha,beta-ungesättigter Carbonsäure mit Glycidylestern und damit copolymerisierbaren alpha,beta-ungesättigten Monomeren**
Solution of copolymers based on addition products of alpha-beta unsaturated carbonic acids with glycidyl ester and copolymerisable alpha-beta unsaturated monomers
Solutions de copolymères à base de produits d'addition d'acides carboxyliques alpha-bêta insaturés avec des esters glycidyliques et de monomères alpha-bêta insaturés copolymérisables

(30) Priorität: 20.07.1991 DE 4124167
(43) Veröffentlichungstag der Anmeldung: 24.02.1993
(73) Patentinhaber: SYNTHOPOL CHEMIE Dr. rer. pol. Koch GmbH & CO. KG, 21614 Buxtehude (DE)
(72) Erfinder: dos Santos, Antonio Manuel, W-2150 Buxtehude (DE)
(74) Vertreter: Nielsch, Walter

(56) Entgegenhaltungen:
- EP-A- 0 278 259
- FR-A- 2 442 867

## Beschreibung

Die Erfindung betrifft Copolymerisatlösungen, enthaltend Copolymerisate auf der Basis von Additionsprodukten α, β-ungesättigter Carbonsäure mit Glycidylestern und damit copolymerisierbaren α,β-ungesättigten Monomeren mit und ohne Hydroxylgruppen. Sie betrifft auch die Herstellung derartiger hydroxylgruppenhaltiger Copolymerisate und ihre Verwendung in klaren oder pigmentierten Überzugsmitteln.

Hydroxylgruppenhaltige Copolymerisate auf der Basis von (Meth)acrylaten und Umsetzungsprodukten aus Acrylsäure und Glycidylestern von α-Alkylalkanmonocarbonsäuren und/oder α,α-Dialkylalkanmonocarbonsäuren, die mit organischen Polyisocyanaten zu Überzugsmitteln verarbeitet werden können, sind bekannt. In der DE-AS 16 68 510 werden Copolymerisate aus Additionsprodukten α,β-ethylenisch ungesättigter Carbonsäuren mit Glycidylestern und damit copolymerisierbaren α,β-ungesättigten Monomeren mit und ohne Hydroxylgruppen beschrieben. Die DE-PS 26 03 259 gibt Reaktionslacke an, die spezielle Bindemittel enthalten. Es handelt sich um Copolymerisate auf der Basis von Styrol, Methylmethacrylat, Acrylsäure und Glycidylestern von α-Alkylalkanmonocarbonsäuren und/oder α,α-Dialkylalkanmonocarbonsäuren, die durch Erhitzen unter gleichzeitiger Veresterung und Polymerisation in inerten Lösungsmitteln in Anwesenheit von Polymerisationsinitiatoren gegebenenfalls mit Kettenabbrechern erhalten werden.

Der Festkörper in den Copolymerisatlösungen gemäß dem Stand der Technik beträgt nach beendeter gleichzeitiger Veresterung und Copolymerisation höchstens 55 Gew.-% und gemäß DE-OS 37 40 774 Seite 4 (Komponente A) etwa 65 Gew.-%, obwohl dort ein besonders hoher Festkörper angestrebt wird.

Ähnliche Copolymerisatlösungen sind aud DE-OS 25 51 615 bekannt.

Aufgabe der Erfindung ist es
1. Copolymerisatlösungen zur Verfügung zu stellen, die einen wesentlich erhöhten Festkörper aufweisen,
2. Verfahren zur Herstellung der neuen Copolymerisatlösungen zur Verfügung zu stellen,
3. Die aus den neuen Copolymerisatlösungen erhältlichen Bindemittel sollen beim Einsatz mit zwei- und/oder mehrwertigen Polyisocyanaten einen erhöhten Festkörpergehalt bei vergleichbarer Yiskosität besitzen. Dies bedeutet, daß die aus den Copolymerisatlösungen bzw. dem Bindemittel der Erfindung hergestellten Reaktionslacke in kurzer Zeit als überzug aufgebracht werden können, z.B. durch Weglassen eines oder mehrerer Spritzgänge. Weiterhin sollen durch den höheren Festkörper in den fertigen Reaktionslacken weniger organische Lösungsmittel an die Umwelt abgegeben werden.
4. Die Copolymerisatlösungen bzw. die Bindemittel sollen in Verbindung mit aliphatischen Polyisocyanaten luft- und ofentrocknende festkörperreiche Zweikomponentenlacke mit hoher mechanischer Widerstandsfähigkeit, Chemikalien-, Wetter- und Ultraviolettbestrahlungsbeständigkeit ergeben.
5. Die Bereitstellung von Copolymerisatlösungen bzw. Bindemitteln bzw. klaren oder pigmentierten Überzugsmitteln mit erhöhtem Festkörpergehalt, die zu Überzügen mit hohem Glanz, guter Fülle, gutem Verlauf, weniger Umweltbelastung und einer verbesserten Verarbeitungssicherheit führen.
6. Die Copolymerisatlösungen bzw. die Bindemittel sollen zu Reaktionslacken verarbeitbar sein, die sowohl als Autoserienerstlackierungen als auch Autoreparaturlackierungen hervorragend geeignet sind.
7. Die bereits unter Ziffer 3 genannten Bindemittel sollen als verbesserte Klarlacke für die Automobildecklackierung solche Lackfilme liefern, die eine ausgezeichnete Scheuerbeständigkeit in Automobil-Waschstraßen aufweisen.
8. Die neuen Polymerisatlösungen sollen auch mit Aminoplastharzen zu Bindemitteln kombinierbar sein, die zu Einbrennlacken verarbeitet werden, die sowohl pigmentiert als auch als Klarlacke vorliegen können. Es soll auch möglich sein, der Copolymerisat-Aminoplastkombination Polyisocyanate zuzusetzen. Auch die vorstehenden Bindemittel sind für verbesserte Einbrenn-Klarlacke für die Automobil-Decklackierung geeignet, die solche Lackfilme liefern, die eine ausgezeichnete Scheuerbeständigkeit in Automobil-Waschstraßen aufweisen.

Es hat sich gezeigt, daß diese Aufgabe gelöst wird durch die Bereitstellung einer Copolymerisatlösung enthaltend inerte organische Lösungsmittel und Copolymerisate auf der Basis von Additionsprodukten α,β-ungesättigter Carbonsäure mit Glycidylestern und damit copolymerisierbaren α,β-ungesättigten Monomeren mit und ohne Hydroxylgruppen, dadurch gekennzeichnet, daß die Copolymerisatlösung die Komponenten

| | | |
|---|---|---|
| A) | 15,0 - 50,0 Gew.-% | von in der Lackindustrie üblichen inerten organischen Lösungsmittel, |
| B) | 50,0 - 85,0 Gew.-% | hydroxylgruppenhaltige Copolymerisate aufweist, die erhalten worden sind durch gleichzeitige Addition ,Kondensation und Polymerisation in inerten organischen Lösungsmitteln oder deren Gemische, die einen Siedebereich zwischen 160°C bis 200°C aufweisen, durch Erhitzen unter Rückflußkühlung in Anwesenheit von Polymerisationsinitiatoren, gegebenenfalls Kettenüberträgern, gegebenenfalls Carboxy-Epoxy-Katalysatoren von |
| a) | 10 bis 30 Gew.-% | Glycidylester von α-Alkylalkanmonocarbonsäuren und/oder α,α-Dialkylalkanmonocarbonsäuren, |
| b) | 5 bis 12 Gew.-% | Methacrylsäure, |
| c) | 10 bis 27 Gew.-% | Hydroxyalkylmethacrylat mit 1 bis 6 C-Atomen im Hydroxyalkylrest, |
| d) | 10 bis 38 Gew.-% | Styrol, |
| e) | 1 bis 5 Gew.-% | Polypropylenglycolmonomethacrylat mit einem mittleren Molekulargewicht von 350 bis 387, |
| f) | 3 bis 20 Gew.-% | Alkylmethacrylat mit 1 bis 8 C-Atomen im Alkylrest, |
| g) | 9 bis 20 Gew.-% | lösemittelfreies, reaktives, methoxyfunktionales Polysiloxan, wobei die Summe der Komponenten a, b, c, d, e, f und g jeweils 100 Gew.-% beträgt. |

Eine spezielle Ausführungsform des Copolymerisates ist erhältlich aus:

| | | |
|---|---|---|
| a) | 17 bis 25 Gew.-% | Glycidylester von α-Alkylalkanmonocarbonsäuren und/oder α,αDialkylalkanmonocarbonsäuren, |
| b) | 7 bis 12 Gew.-% | Methacrylsäure, |
| c) | 15 bis 26 Gew.-% | 2-Hydroxyethylmethacrylat, |
| d) | 17 bis 28 Gew.-% | Styrol, |
| e) | 1 bis 3 Gew.-% | Polypropylenglycolmonomethacrylat mit einem mittleren Molekulargewicht von 350 bis 387, |
| f) | 5 bis 15 Gew.-% | Methylmethacrylat, |
| g) | 12 bis 17 Gew.-% | lösemittelfreies, reaktives, methoxyfunktionelles Polysiloxan, wobei die Summe der Komponenten a, b, c, d, e, f und g jeweils 100 Gew.-% beträgt. |

Eine bevorzugte Ausführungsform des Copolymerisates ist erhältlich aus:

| | | |
|---|---|---|
| a) | 18 bis 24 Gew.-% | Glycidylester von α-Alkylalkanmonocarbonsäuren und/oder α,α-Dialkylalkanmonocarbonsäuren, |
| b) | 6 bis 12 Gew.-% | Methacrylsäure, |
| c) | 17 bis 22 Gew.-% | 2-Hydroxyethylmethacrylat, |
| d) | 20 bis 28 Gew.-% | Styrol, |
| e) | 1 bis 3 Gew.-% | Polypropylenglycolmonomethacrylat mit einem mittleren Molekulargewicht von 350 bis 387, |
| f) | 8 bis 12 Gew.-% | Methylmethacrylat, |
| g) | 12 bis 17 Gew.-% | lösemittelfreies, reaktives, methoxyfunktionales Polysiloxan, wobei die Summe der Komponenten a, b, c, d, e, f und g jeweils 100 Gew.-% beträgt. |

Eine andere bevorzugte Ausführungsform der Copolymerisatlösung ist erhältlich aus

| | | |
|---|---|---|
| a) | 18 bis 22 Gew.-% | Glycidylester von α-Alkylalkanmonocarbonsäuren und/oder α,α-Dialkylalkanmonocarbonsäuren, |
| b) | 7 bis 10 Gew.-% | Methacrylsäure, |
| c) | 19 bis 22 Gew.-% | 2-Hydroxyethylmethacrylat, |
| d) | 20 bis 28 Gew.-% | Styrol, |
| e) | 1 bis 3 Gew.-% | Polypropylenglycolmonomethacrylat mit einem mittleren Molekulargewicht von 350 bis 387, |
| f) | 9 bis 11 Gew.-% | Methylmethacrylat, |
| g) | 13 bis 17 Gew.-% | lösemittelfreies, reaktives, methoxyfunktionelles Polysiloxan, wobei die Summe der Komponenten a, b, c, d, e, f und g jeweils 100 Gew.-% beträgt. |

Die bevorzugteste Ausführungsform der vorstehenden Copolymerisatlösungen ist dadurch gekennzeichnet, daß diese nach ihrer Herstellung aus

| | | |
|---|---|---|
| A) | 15,0 - 25,0 Gew.-%, | bevorzugt 15 bis 20 Gew.-%, von in der Lackindustrie üblichen inerten Lösungsmitteln bevorzugt mit Siedepunkten von 150 bis 200°C und |
| B) | 75,0 - 85,0 Gew.-%, | bevorzugt 85 bis 80 Gew.-% hydroxylgruppenhaltigen Copolymerisaten besteht. |

Es hat sich gezeigt, daß eine derartige Copolymerisatlösung beim Einsatz mit zwei- und/oder mehrwertigen Polyisocyanaten einen im Vergleich mit dem Stand der Technik erhöhten Festkörpergehalt bei vergleichbarer Viskosität bzw. eine erniedrigte Viskosität bei gleichem Festkörpergehalt ergibt. Es weist darüber hinaus lacktechnische Vorteile, wie verbesserten Glanz, Fülle, Verlauf, Verarbeitungssicherheit bei High-Solid-Gehalt sowie bessere Umwelteigenschaften auf.

Die Herstellung der Copolymerisatlösung der Erfindung erfolgt durch Lösungspolymerisation. Hierbei findet gleichzeitig eine Addition der Komponenten a und b sowie eine Einkondensation der Komponente g unter Abspaltung von Methanol statt, welches im Rückfluß des siedenden Reaktionsgemisches entfernt wird. Bei diesem Verfahren werden die Lösemittel und die Glycidylester von α-Alkylalkanmonocarbonsäuren und/oder α,α-Dialkylalkanmonocarbonsäuren in das Reaktionsgefäß vorgelegt, auf Siedetemperatur erhitzt und das Gemisch bzw. die Gemische aus Monomeren gegebenenfalls Carboxy-Epoxy-Katalysatoren und Initiator kontinuierlich in etwa 12 bis 20 Stunden zudosiert. Nach Zulaufende wird durch Halten auf Polymerisationstemperatur während 2 bis 5 Stunden nachpolymerisiert - gegebenenfalls unter Zusätz von weiterem Polymerisationsinitiator bis die Umsetzung praktisch vollständig ist. Die Polymerisation wird bei Temperaturen zwischen 140 und 195°C, vorzugsweise bei 160 bis 190°C durchgeführt, wobei bei etwa 180 bis 190°C die Umsetzung gestartet wird. Im Verlauf der gleichzeitigen Copolymerisation, Addition und Kondensation fällt die Temperatur ab.

Ein Verfahren zur Herstellung der hydroxylgruppenhaltigen Copolymerisatlösungen gemäß der Erfindung ist gekennzeichnet durch Erhitzen eines Gemisches, bestehend aus der Komponente A und den Monomeren der Komponente B, wobei der Siedepunkt der Komponente A so bemessen vorliegt, daß am Ende der Umsetzung die Copolymerisate mit dem gewünschten Festkörper in der Komponente A vorliegen, als Vorlage, in die bei Polymerisationstemperatur entsprechend dem Fortschritt der Polymerisation und gleichzeitig ablaufenden Addition und Kondensation als Zulauf, man die erforderlichen Monomeren a, b, c, d, e, f und Komponente g, Polymerisationsinitiatoren, gegebenenfalls Kettenüberträger, gegebenenfalls Carboxy-Epoxy-Katalysatoren, allmählich einlaufen läßt und nach Beendigung des Zulaufs - falls erforderlich - noch auf Polymerisationstemperatur hält, bis durch Nachpolymerisation die Umsetzung beendet ist.

Eine Ausführungsform des vorstehenden Verfahrens ist dadurch gekennzeichnet, daß die Komponente A einen Siedebereich zwischen 180°C und 200°C aufweist und als Vorlage auf Rückflußtemperatur gehalten wird und der Zulauf gleichmäßig im Verlaufe von 12 bis 20 Stunden zudosiert wird und nach Zulauf-Ende weiter auf Rückflußtemperatur gehalten wird bis die Copolymerisation beendet ist, wobei die Rückflußtemperatur bis auf etwa 140°C absinken kann.

In einer bevorzugten Ausführungsform, die durch die Beispiele verdeutlicht wird, wird ein Gemisch von inerten Lösungsmitteln vorgelegt und unter Rückfluß zum Sieden erhitzt, wobei 1 die inerten Lösungsmittel so ausgewählt vorliegen, daß diese unter Rückflußkühlung bei etwa 188°C sieden. Nach dem Start der Copolymerisation und gegen Ende der Zulaufzeit fällt die Siedetemperatur der Copolymerisatlösung auf etwa 170°C bis etwa 140°C ab. Nach Zulaufende wird dann noch bei 170°C bis etwa 140°C nachpolymerisiert bis die Umsetzung praktisch vollständig ist und der gewünschte Festkörpergehalt vorliegt (in den Beispielen 80% Festkörper).

Die Polymerisationsreaktion wird mit bekannten Polymerisationsinitiatoren gestartet. Geeignete Initiatoren sind z.B. Peroxide, die in einer Reaktion 1. Ordnung thermisch in Radikale zerfallen. Initiatorart und -menge werden so gewählt, daß bei der Polymerisationstemperatur während der Zulaufphase ein möglichst konstantes Radikalangebot vorliegt.

Bevorzugt eingesetzte Initiatoren für die Polymerisation sind:

Dialkylperoxide, wie Di-tert-Butylperoxid, Di-cumylperoxid; Hydroperoxide, wie Cumolhydroperoxid, tert.-Butylhydroperoxid; Perester, wie tert.-Butylperbenzoat, tert.-Butyl-per-3,5,5-trimethylhexanoat, tert.-Butyl-per-2-ethylhexanoat.

Die Polymerisationsinitiatoren, insbesondere tert.-Butyl-per-2-ethylhexanoat werden bevorzugt in einer Menge von 2 bis 6 Gew.-%, bezogen auf die Monomeren-Einwaage zugesetzt.

Zur Regelung des Molekulargewichts können Kettenüberträger mitverwendet werden. Beispiele sind Mercaptane, Thioglykolsäureester, Chlorkohlenwasserstoffe, bevprzugt wird Dodecylmercaptan eingesetzt.

Als Lösungsmittel können in der Lackindustrie übliche inerte Lösemittel einzeln, bevorzugt im Gemisch, mit Siedepunkten von 150°C bis 200°C, bevorzugt 154°C bis 200°C, für die Lösungspolymerisation eingesetzt werden. Bevorzugt eignen sich solche organischen Lösemittel, die dann später auch in den fertigen überzugsmitteln eingesetzt werden. Beispiele für solche Lösemittel sind: Glykolether, wie Ethylenglykoldimethylether; Glykoletherester, wie Ethylglykolacetat, Butylglykolacetat, 3-Methoxy-n-butylacetat, Butyldiglykolacetat, Methoxypropylacetat; Ethoxypropylacetat, Ester, wie Butylacetat, Isobutylacetat, Amylacetat; und Ketone,wie Methylethylketon, Methylisobutylketon, Diisobtylketon, Cyclohexanon, Isophoron,aromatische Kohlenwasserstoffe, wie Xylol. Shellsol A (eingetragenes Warenzeichen für aromatische Kohlenwasserstoffgemische) und aliphatische Kohlenwasserstoffe können ebenfalls im Verschnitt mit den oben genannten Lösemitteln eingesetzt werden. Bevorzugt wird ein Gemisch aus Butylglykolacetat, Shellsol A und Ethoxypropylacetat im Gew.-Verhältnis 1:2:2 verwendet.

### Als Komponente a) werden zur Herstellung der erfindungsgemäßen hydroxylgruppenhaltigen Copolymerisatlösungen

Glycidylester von α-Alkylalkanmonocarbonsäuren und/oder α,α-Dialkylalkanmonocarbonsäuren eingesetzt. Bevorzugt handelt es sich um solche der Summenformel C₁₃H₂₄O₃ einzeln oder im Gemisch.

Da dem Glycidylrest im Glycidylester solcher α-Alkylalkanmonocarbonsäuren und/oder α,α-Dialkylalkanmonocarbonsäuren die Summenformel C₃H₅O zukommt, sind die α-Alkylalkanmonocarbonsäuren und α,α-Dialkylalkanmonocarbonsäuren Isomerengemische von solchen Monocarbonsäuren, die eine C₁₀-Kette enthalten. Die Säuren sind dabei bevorzugt völlig gesättigt und am α-ständigen Kohlenstoffatom sehr stark substituiert; Beispiele hierfür werden in "Deutsche Farbenzeitschrift", Heft 10/16. Jahrgang, Seite 435, beschrieben.

Als Hydroxyalkylmethacrylate mit 1 bis 6-C-Atomen im Hydroxyalkylrest sind Hydroxymethylmethacrylat, 2-Hydroxyethylmethacrylat, 2-Hydroxypropylmethacrylat, 4-Butandiolmonomethacrylat, 5-Pentandiolmonomethacrylat, Cyclohexandiolmonomethacrylat und 4-Dihydroxymethylcyclohexanmonomethacrylat, einzeln oder im Gemisch, geeignet, bevorzugt wird 2-Hydroxyethylmethacrylat verwendet.

Als lösungsmittelfreies, reaktives, methoxyfunktionelles Polysiloxan mit enger Molekulargewichtsverteilung, niedrigem durchschnittlichem Molekulargewicht und einem sehr geringen Anteil von flüchtigen Anteilen, wird das Produkt Silicon-Intermediate SY 231 als Komponente g eingesetzt (Hersteller: Wacker-Chemie GmbH, 8000 München 22).

Als Carboxy-Epoxy-Katalysatoren auf der Basis einer Alkalimetallverbindung können alle Natrium-, Lithium-, Kalium-, Rubidium- und Cäsiumverbindungen - einzeln oder im Gemisch - eingesetzt werden, die im Reaktionsgemisch aus Methacrylsäure, Monoglycidylverbindung und Vinylverbindungen löslich sind oder zumindest bei der Zugabe und/oder beim Halten des Reaktionsansatzes auf Reaktionstemperatur zwecks Veresterung durch Addition bei gleichzeitiger Copolymerisation in Lösung gehen, wobei die eingesetzte Alkaliverbindung jedoch frei von solchen Bestandteilen sein soll, die bei der Copolymerisation des Additionsproduktes, das einen Ester darstellt, sich ungünstig auswirken können.

Brauchbar sind beispielsweise die Carbonate, Bicarbonate, Formiate , Jodide, Bromide, Fluoride und die Hydroxyde der vorstehend genannten Alkalimetalle. Im Fabrikmaßstab haben sich am besten Lithiumhydroxyd und Kaliumhydroxyd - einzeln oder im Gemisch - bewährt.

Bei der Verwendung im Fabrikmaßstab wird hierbei auf Grund des billigen Preises und der vorzüglichen Katalysatoreneigenschaften das Kaliumhydroxyd besonders vorteilhaft eingesetzt. Zweckmäßig wird das eingesetzte Alkalihydroxyd bzw. die Alkaliverbindung oder deren Gemische in der zu veresternden Methacrylsäure aufgelöst. Man kann aber auch aus der Alkaliverbindung, z.B. Alkalihydroxyden, Alkalicarbonaten oder Alkalibicarbonaten, und der Methacrylsäure erst ihr Alkalisalz als Katalysator herstellen und kann dann das Alkalisalz der Methacrylsäure in dem Reaktionsgemisch lösen bzw. bei der¶Durchführung der Additionsreaktion durch Erhitzen in Lösung bringen.

Im allgemeinen ist es ausreichend, von etwa 0,001 Gew.-% bis etwa 0,5 Gew.-% Alkalimetallverbindung der schon genannten Art, bezogen auf das Gewicht der esterbildenden Komponenten, für die Additionsreaktion zuzufügen. Bevorzugt wird jedoch ein Zusatz von etwa 0,001 Gew.-% bis etwa 0,3 Gew.-% Alkalimetallverbindung.

Der bevorzugteste Bereich für den Zusatz beträgt etwa 0,005 Gew.-% bis 0,1 Gew.-% Alkalimetallverbindungen, wobei von den Alkalimetallverbindungen dann Kalium- und Lithiumverbindungen ganz besonders vorteilhaft Verwendung finden.

Spezielle Untersuchungen haben gezeigt, daß bei der Verwendung eines Alkali-Carboxy-Epoxy-Katalysators, vorzugsweise AlkaliHydroxyd, -carbonat und -bicarbonat bei der Herstellung der Copolymerisatlösung in den daraus mit Polyisocyanaten erhältlichen Beschichtungsmitteln besondere, nicht zu erwartende Effekte auftreten. So haben derartige Reaktionslacke eine längere Topfzeit und die daraus hergestellten Beschichtungen besitzen ein besseres Alterungsverhalten hinsichtlich des Elastizitätsabbaus.

Die erfindungsgemäßen Copolymerisatlösungen können zu klaren oder pigmentierten Überzugsmitteln verarbeitet werden. Hierzu werden sie in Lösungsmitteln mit gegebenenfalls lacküblichen Zusatz- und Hilfsstoffen mit einem üblichen Lack-Polyisocyanat versetzt. Dabei werden bevorzugt 60,0 bis 80,0 Gew.-% des hydroxylgruppenhaltigen Copolymerisats B mit 20 bis 40 Gew.-% zwei- und/oder mehrwertigem Polyisocyanat als Komponente C versetzt; die Summe der Komponenten B und C beträgt jeweils 100 %.

Die zur Vernetzung des erfindungsgemäßen Copolymerisats B verwendbaren Polyisocyanate C sind lacktypische Polyisocyanate.

Der Anteil an Polyisocyanat-Vernetzer wird so gewählt, daß auf eine Hydroxylgruppe der Bindemittelmischung 0,5 bis 1,5 Isocyanat-Gruppen entfallen. Überschüssige Isocyanat-Gruppen können durch Feuchtigkeit abreagieren und zur Vernetzung beitragen.

Es können aliphatische, cycloaliphatische und aromatische Polyisocyanate verwendet werden wie Hexamethylendiisocyanat, Trimethylhexamethylendiisocyanat, Isophorondiisocyanat, 4,4'Diisocyanatodicyclohexylmethan, Toluylen-2,4-diisocyanat,o-,m- und p-Xylylendiisocyanat, 4,4'-Diisocyanatodiphenylmethan; verkappte Polyisocyanate, wie mit CH-, NH- oder OH-aciden Verbindungen verkappte Polyisocyanate; sowie z.B. Biuret-, Allophanat-, Urethan- oder Isocyanurat-Gruppen enthaltende Polyisocyanate. Beispiele für derartige Polyisocyanate sind ein Biuretgruppen enthaltendes Umsetzungsprodukt aus 3 Molen Hexamethylendiisocyanat mit 1 Mol Wasser mit einem NCO-Gehalt von ca. 22 % (entsprechend dem Handelsprodukt Desmodur N BAYER AG, eingetragenes Warenzeichen); ein Isocyanatgruppen enthaltendes Polyisocyanat, das durch Trimerisierung von 3 Molen Hexamethylendiisocyanat hergestellt wird mit einem NCO-Gehalt von etwa 21,5 % (entsprechend dem Handelsprodukt Desmodur N 3390 BAYER AG, eingetragenes Warenzeichen) oder Urethangruppen enthaltende Polyisocyanate, welche Reaktionsprodukte darstellen aus 3 Molen Toluylendiisocyanat und 1 Mol Trimethylolpropan mit einem NCO-Gehalt von etwa 17,5 % (entsprechend dem Handelsprodukt Desmodur L BAYER AG, eingetragenes Warenzeichen).

Bevorzugt eingesetzt werden Desmodur N und Desmodur N 3390, BAYER AG, eingetragenes Warenzeichen.

Aus den Komponenten B und C werden, wie vorstehend erwähnt, transparente oder pigmentierte Überzugsmittel hergestellt. Transparente Überzugsmittel finden z.B. Verwendung als Klarlacke in einer 2-Schicht-Lackierung, die sich zusammen aus einer Pigmente enthaltenden Basisschicht und einer transparenten Deckschicht, die im Naß-in-Naß-Verfahren appliziert und anschließend entweder an der Luft oder in Einbrennöfen gehärtet werden. Diese Klarlacke enthalten neben üblichen Lösemitteln zur Einstellung der Spritzviskosität gegebenenfalls übliche Verlaufs- und Lichtschutzmittel, sowie andere übliche lacktechnische Zusatzstoffe.

Die vorstehenden transparenten oder pigmentierten Überzugsmittel können als weiteren Härter 1 bis 10 Gew.-% für Lacke übliche reaktive Aminoplastharze enthalten.

Zur Herstellung pigmentierter Überzugsmittel werden die Einzelbestandteile miteinander vermischt und in üblicher Weise homogenisiert bzw. vermahlen. Beispielsweise kann so vorgegangen werden, daß zunächst ein Teil der Copolymerisatlösung mit gegebenenfalls vorhandenen Pigmenten und lacküblichen Hilfsstoffen und Lösemitteln vermischt und in Mahlaggregaten angerieben wird.

Danach wird das Mahlgut mit der restlichen Copolymerisatlösung komplettiert.

Die aus der erfindungsgemäßen hydroxylgruppenhaltigen Copolymerisatlösung erhaltenen Überzugsmittel weisen den großen Vorteil eines hohen Festkörpergehalts bei relativ geringer Viskosität auf. Ihre Verlaufseigenschaften sind ausgezeichnet, und sie führen zu Überzügen mit ausgezeichnetem Glanz und hervorragender Fülle. Die erhaltenen Überzüge sind sehr rasch montagefest und können kurz nach dem Auftrag auf ein Klebeband abgeklebt werden, um beispielsweise eine Mehrfachlackierung zu ermöglichen. Die aus den erfindungsgemäßen Copolymerisatlösungen erhältlichen Überzugsmittel sind somit besonders in der Kraftfahrzeugindustrie zur Lackierung von Kraftfahrzeugkarossen, jedoch auch auf dem Reparatursektorzur raschen Ausbesserung von beispielsweise Unfallschäden geeignet.

Die Copolymerisatlösungen der Erfindung können durch Kombination mit Aminoplastharzen zu Bindemitteln verarbeitet werden, die für Einbrennlacke bestimmt sind. Als geeignete Aminoplastharze kommen die bekannten Umsetzungsprodukte von Aldehyden, insbesondere Formaldehyd, mit menreren Amino- oder Amidogruppen tragenden Substanzen, wie z.B. Melamin, Harnstoff, N,N'-Ethylenharnstoff, Dicyandiamid oder Benzoguanamin, die durch Veretherung mit Alkoholen, insbesondere n-8utanol oder Isobutanol erhalten worden sind, in Frage, besonders Melamin-Formaldehyd-Kondensate, z.B. mit Isobutanol verethertes Melamin-Formaldehyd-Kondensat (durchschnittliches Molverhältnis 1 Melamin-6-Formaldehyd, 3 Mol Isobutanol). So kann ein Einbrennklarlack aus 50 bis 60 Gew.-% der üblicherweise in der Lackindustrie verwendeten Lösungsmittel aus 25 bis 44 Gew.-% Copolymerisaten der Erfindung, 19 bis 4 Gew.-% eines Aminoplastharzes sowie der für Einbrennlacke üblichen sonstigen Zusätze bestehen. Einbrennlacke können 60 bis 90 Gew.-% Copolymerisate der Erfindung als Bindemittel und 10 bis 40 Gew.-% reaktive Aminoplastharze als Härter enthalten.

Die folgenden Beispiele dienen zur Erläuterung der Erfindung:

### Herstellung der Copolymerisatlösung

In einen 4-1-Dreihalskolben, der mit einem Rührwerk, Kontaktthermometer, Kugelkühler mit Rücklauffalle für Methanol und gegebenenfalls anderen Spaltprodukten und 2 Tropftrichtern ausgerüstet ist, wird Bestandteil I entsprechend den Mengenangaben in der nachfolgenden Tabelle vorgelegt und unter Rühren bei eingeschalteter Rückflußkühlung auf etwa 180 bis 190°C erhitzt Innerhalb von 16 Stunden wird Bestandteil II (Monomerengemisch und KOH als Carboxy-Epoxy-Katalysator und gegebenenfalls Kettenübertragungsmittel) und Bestandteil III (Lösungsmittel-Initiatorgemisch) kontinuierlich aus den Tropftrichtern 1 und 2 zudosiert. Die Temperatur fällt von 188°C gegen Ende der Zulaufzeit auf etwa 160 bis etwa 165°C ab. Nach Zulaufende wird anschließend 3 Stunden bei etwa 160 bis 167°C nachpolymerisiert, wobei nach einer Stunde - falls erforderlich - noch Polymerisationsinitiator zugefügt wird, so daß die Umsetzung praktisch vollständig ist.

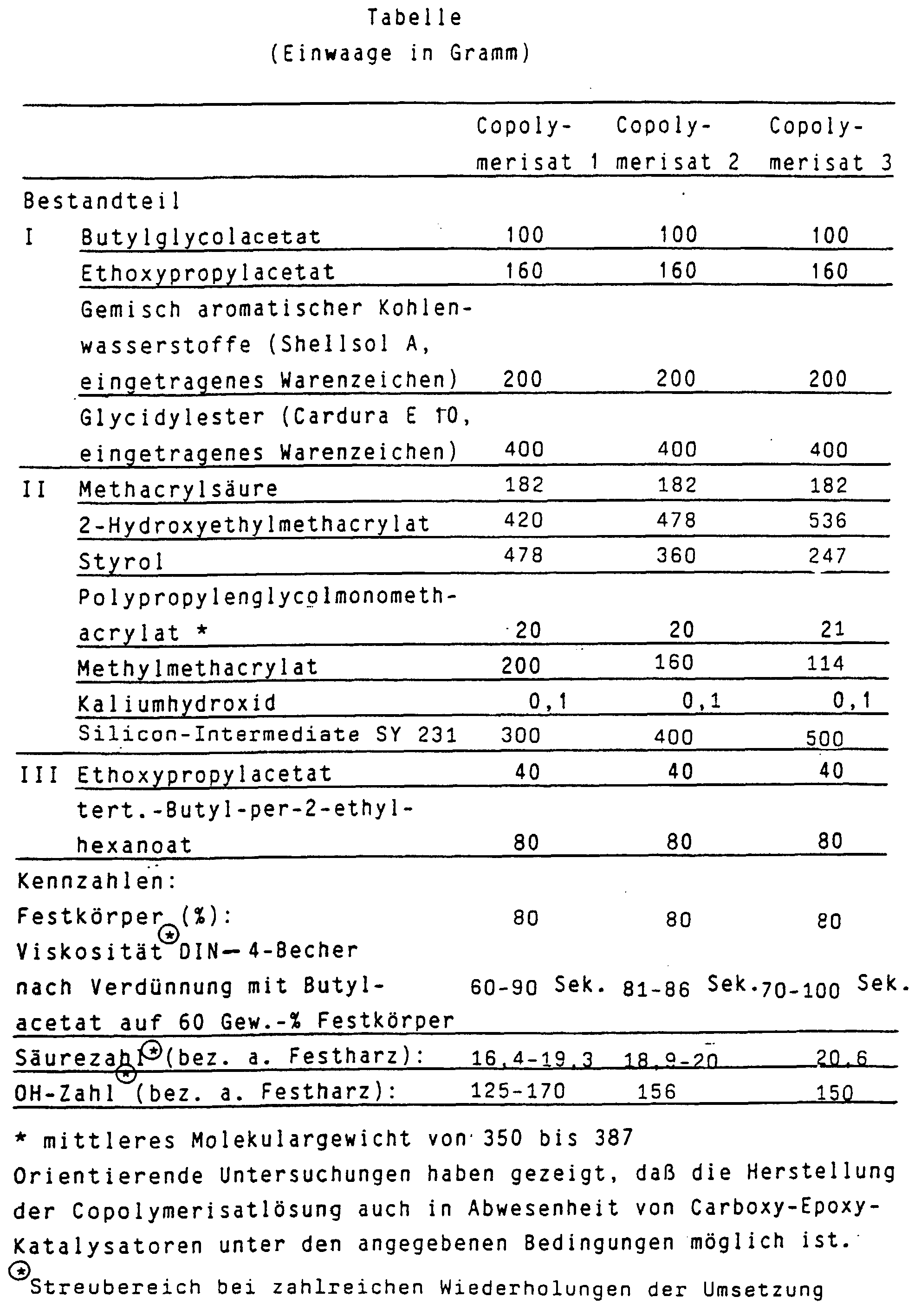

In einem gereinigten, trockenen Behälter werden 800 g Butylacetat, 850 g Xylol, 1050 g Gemisch aromatischer Kohlenwasserstoffe (Shellsol A Warenzeichen), 150 g Lichtschutzmittel (Handelsbezeichnung Tinuvin® 1130), 100 g Lichtschutzmittel (Handelsbezeichnung Tinuvin® 292), 50 g 5%ige Dibutylzinndilaurat-Lösung in Xylol als Beschleuniger und 200 g Verlaufmittel (Handelsname Byk® 300 10%ig inXylol) gründlich vermischt. Anschließend wird 6800 g Copolymerisat-Lösung 1 (zuvor von 80 Gew.-% Festkörper durch Zugabe von Butylacetat auf 75 Gew.-% Festkörper eingestellt) zugegeben und gründlich gemischt. Dann wird 3000 g Lackpolyisocyanat/Desmodur® N 3390 80%ig in Xylol/Butylacetat-Gemisch 1:1 gelöst, dem Ansatz zugefügt und gründlich vermischt und sofort im DIN-4-Becher die Viskosität bestimmt. Durch Verdünnen mit einem Shellso® A/Butyl-acetat-Gemisch 1:1 wird auf die Spritzviskosität 21 Sekunden Auslaufzeit eingestellt.

Der Festkörper des vorstehenden Klarlackes beträgt 54,8 Gew.-%. Dies bedeutet gegenüber dem Stand der Technik von nur 50,2 Gew. -% Festkörper eine deutliche Verbesserung. Weitere Prüfungen des Klarlackes haben ergeben, daß dieser verbesserte Gebrauchseigenschaften besitzt. Der auf Prüfplatten aufgetragene Klarlack nach dem Abtrocknen 45 Minuten auf 80°C erhitzt,ergab eine Pendelhärte von 120 Sekunden und nach dem Abtrocknen 30 Minuten auf 130°C erhitzt eine Pendelhärte von 157 Sekunden. Die Messung erfolgte nach Stehenlassen während einer Stunde zwecks Abkühlung.

### Herstellung eines Weißlackes aus der Copolymerisatlösung 1:

In einem gereinigten, trockenen Behälter werden 550 g Shellsol® A, 665 g Butylacetat 98/100, 200 g Antiabsetzmittel, bestehend aus Bentone® 38,10%ig in Xylol und 4% Anti-Terra® U, 50 g Dibutylzinndilaurat 1 gew.-%ig in Xylol, 2500 g Copolymerisatlösung 1 (wie vor stehend schon angegeben, auf 75 Gew.-% Festkörper verdünnt) und 375 g Benetzungsmittel (Handelsname Byk® 160 30%ig) gut vermischt und unter Rühren wird allmählich 2900 g Weißpigment Titandioxid 2160 zugegeben und in eine Perlmill gegeben. Mit einem Perlverhältnis 1:1 wird 30 Minuten gemahlen. Danach wird der Ansatz mit 1500 g Copolymerisatlösung 1, zuvor auf 75 Gew.-% Festkörper eingestellt, 200 g Verlaufmittel (Byk® 344 10gew.-%ig in Xylol), 300 g Entlüftungsmittel (Byketol® 0K) und 760 g n-Butylacetat versetzt und gut vermischt. Zu diesem Ansatz wird 1800 g Verdünnung Bd 1316 als Lösemittel gegeben und danach unter gutem Rühren 1800 g Lackpolyisocyanat Desmodur® N 3390 90%ig zugefügt. Der Festkörper des vorstehenden Weißlackes beträgt 63 Gew.-%. Diese Tatsache läßt erkennen, daß die Lacke, die die erfindungsgemäße Copolymerisatlösung enthalten, in kürzerer Zeit als Überzug aufgebracht werden können (z.B. Weglassen von Spritzgängen) und daß der hergestellte überzug trotzdem volle Gebrauchseigenschaften besitzt und durch die Verkürzung des Spritzganges weniger organische Lösungsmittel an die Umgebung abgegeben werden. Die vorstehend genannte Verdünnung Bd 1316 wird durch vermischen von 2500 g Ethoxypropylacetat, 2500 g n-Butylacetat, 500 g Butoxyl (=3-Methoxy-1-butylacetat), 2500 g Xylol und 2000 g Shellsol® A erhalten.

Die Topfzeit des vorstehenden Weißlackes betrug, gemessen als Auslaufzeit im DIN-4-Becher:

| | |
|---|---|
| sofort nach Herstellung gemessen | 21 Sekunden |
| nach 2 Stunden | 27 " |
| nach 4 Stunden | 39 " |
| nach 6 Stunden | 58 " |
| nach 8 Stunden | 120 " |

Stahlplatten beschichtet mit handelsüblichem Füller wurden nach einem Tag mit dem vorstehenden Weißlack überlackiert und 60 Minuten bei 80°C ausgehärtet. Die Eigenschaften wurden nach 24 Stunden gemessen:

| | | | |
|---|---|---|---|
| Füller | 24 µm | | |
| Lack | 44 µm | | |
| Glanz ≮ 60° | 93 % gemessen nach DIN 67530 sowie ISO 2813 | | |
| Pendelhärte nach König | 108 " gemessen nach OIN 53157 oder ISO 1522 | | |
| Buchholzhärte | 87 gemessen nach DIN 53153 oder ISO 2815 | | |
| Erichsentiefung | 7,5 mm gemessen nach DIN 53156 oder ISO 1520 | | |
| Haftung (Gitterschnitt-Prüfung) | | Gt 0 | gemessen nach DIN 53151 oder ISO 2409 |
| Beständigkeitsprüfung | 5' Xylol | i.0 | |
| | 5' Super | | |
| | bleifrei | i.0 | |

Beständigkeitsprüfungen mit Xylol bzw. Superkraftstoff bleifrei.

Der eingebrannte Film des Weißlackes wurde mit einem mit Xylol bzw. Superkraftstoff bleifrei getränkten Wattebausch im abgedeckten Zustand 5 Minuten belastet. Nach dem Abnehmen des Wattebausches und Abwischen zum Entfernen der Prüfflüssigkeit wurde der trockene belastete Film beurteilt. Bei dem gemessenen Prädikat "in Ordnung" dürfen keine Filmveränderungen vorliegen.

### Auswertung der vorstehenden Prüfergebnisse:

Trotz des hohen Feststoffgehaltes des Prüflackes zeigen die gemessenen Werte, daß der Glanz, die Pendelhärte nach König, die Buchholzhärte, die Erichsen-Tiefung, die Gitterschnitt-Prüfung und die Beständigkeitsprüfungen Werte ergeben haben, die sehr guten Handelsprodukten entsprechen, die jedoch den Nachteil haben, daß die Lacke nur einen niedrigeren Festkörpergehalt aufweisen. Jedem Fachmann ist bekannt, daß es mit ansteigendem Festkörpergehalt in Lacken sehr schwierig ist, die geforderten hohen Qualitätsmerkmale überhaupt zu erreichen, so daß die Prüfergebnisse überraschende Eigenschaften anzeigen.

### Herstellung eines Klarlackes aus der Copolymerisatlösung 2

In einen gereinigten, trockenen Behälter werden 800 g n-Butylacetat, 850 g Xylol, 1050 g Gemisch aromatischer Kohlenwasserstoffe (Shellsol A Warenzeichen), 150 g Lichtschutzmittel (Handelsbezeichnung Tinuvin® 1130), 100 g Lichtschutzmittel (Handelsbezeichnung Tinuvin® 292), 50 g 5%ige Dibutylzinndilaurat-Lösung in Xylol als Beschleuniger und 200 g Verlaufmittel (Handelsname Byk® 300 10%ig in Xylol) gründlich vermischt. Anschließend wird 6800 g Copolymerisat-Lösung 2 (Zuvor von 80 Gew.-% Festkörper durch Zugabe von Butylacetat auf 75 Gew.-% Festkörper eingestellt) zugegeben und gründlich gemischt. Dann wird 3000 g Lackpolyisocyanat/Desmodur® N 3390 80%ig in Xylol/Butylacetat-Gemisch 1:1 gelöst, dem Ansatz zugefügt und gründlich vermischt und sofort im DIN-4-Becher die Viskosität bestimmt. Durch Verdünnen mit einem Shellsol® A/Butylacetat-Gemisch 1:1 wird auf die Spritzviskosität 21 Sekunden-Auslaufzeit eingestellt.

Der Festkörper des vorstehenden Klarlackes beträgt 54,7 Gew.-%. Dies bedeutet gegenüber dem Stand der Technik von nur 50,2 Gew.-% Festkörper eine deutliche Verbesserung. Weitere Prüfungen des Klarlackes haben ergeben, daß dieser verbesserte Gebrauchseigenschaften besitzt.

### Herstellung eines Weißlackes aus der Copolymerisatlösung 2:

In einen gereinigten, trockenen Behälter werden 550 g Shellsol® A, 665 g n-Butylacetat, 200 g Antiabsetzmittel, bestehend aus Bentone® 38,10%ig in Xylol und 4% Anti Terra® U, 50 g Dibutylzinndilaurat 1 gew.-%ig in Xylol, 2500 g Copolymerisatlösung 2 (wie vorstehend schon angegeben, auf 75 Gew.-% Festkörper verdünnt) und 375 g Benetzungsmittel (Handelsname Byk® 60 30%ig) gut vermischt und unter Rühren wird allmählich 2900 g Weißpigment Titandioxid 2160 zugegeben und in eine Perlmill gegeben. Mit einem Perlverhältnis 1:1 wird 30 Minuten aufgemahlen. Danach wird der Ansatz mit 1500 g Copolymerisatlösung 2 (75% Festkörper eingestellt), 200 g Verlaufmittel (Byk® 344 10 gew.%-ig in Xylol), 300 g Entlüftungsmittel (Byketol® OK) und 760 g Butylacetat versetzt und gut vermischt. Zu diesem Ansatz wird 1800 g Verdünnung Bd 1316 als Lösemittel gegeben und danach unter gutem Rühren 1800 g Lackpolyisocyanat Desmodur® N 3390 90%ig zugefügt. Der Festkörper des vorstehenden Weißlackes beträgt 63,5 Gew.-%. Diese Tatsache läßt erkennen, daß die Lacke, die die erfindungsgemässe Copolymerisatlösung enthalten, in kürzerer Zeit als Überzug aufgebracht werden können (z.B.) Weglassen von Spritzgängen) und daß der hergestellte Überzug trotzdem volle Gebrauchseigenschaften besitzt und durch die Verkürzung des Spritzganges weniger organische Lösungsmittel an die Umgebung abgegeben werden.

Die Topfzeit des vorstehenden Weißlackes betrug, gemessen als Auslaufzeit im DIN-4-Becher:

| | |
|---|---|
| sofort nach Herstellung gemessen | 21 Sekunden |
| nach 2 Stunden | 33 " |
| nach 4 Stunden | 54 " |
| nach 6 Stunden | 120 " |

Stahlplatten beschichtet mit handelsüblichem Füller wurden nach einem Tag mit dem vorstehenden Weißlack überlackiert und 60 Minuten bei 80°C ausgehärtet. Die Eigenschaften wurden nach 24 Stunden gemessen:

| | | | |
|---|---|---|---|
| Füller | | 22-26 µm | |
| Lack | | 44-51 µm | |
| Glanz ≮ 60° | | 93 % | gemessen nach DIN 67530 oder ISO 2813 |
| Pendelhärte nach König | | 114 " | gemessen nach DIN 53157 oder ISO 1522 |
| Buchholzhärte | | 87 | gemessen nach DIN 53153 oder ISO 2815 |
| Erichsen-Tiefung | | 6,8 mm | gemessen nach DIN 53156 oder ISO 1520 |
| Haftung (Gitterschnitt-Prüfung) | | GT 0 | gemessen nach OIN 53151 oder ISO 2409 |
| Beständigkeits- | 5' Xylol | 1.0. | |
| prüfung | 5' Super, | | |
| | bleifrei | 1.0 | |

Die vorstehenden Prüfergebnisse zeigen ebenfalls die überraschenden Eigenschaften für die aus dem Weißlack auf Basis der Copolymerisatlösung 2 hergestellten Filme an ,wie dies bereits ausführlich vorstehend bei den Filmen des Weißlackes auf Basis der Copolymerisatlösung 1 nachgewiesen worden ist.

### Herstellung eines aminoplasthaltigen Klarlackes aus der Copolymerisatlösung 1:

In einem gereinigten, trockenen Behälter werden 400 g Gemisch aromatischer Kohlenwasserstoffe (Shellsol A Warenzeichen), 35 g Lichtschutzmittel (Handelsbezeichnung Tinuvin® 1130), 35 g Lichtschutzmittel (Handelsbezeichnung Tinuvin® 292) und 200 g Verlaufmittel (Handelsname Byk® 300 10%ig in Xylol) gründlich vermischt. Anschließend wird 5600 g Copolymerisatlösung 1 (zuvor von 80 Gew.-% Festkörper durch Zugabe von Butylacetat auf 75 Gew.-% Festkörper eingestellt), zugegeben und gründlich gemischt. Dann wird 3730g Melaminharz BE 683 dem Ansatz zugegeben und gründlich vermischt und sofort im DIN-4-Becher die Viskosität bestimmt. Durch Verdünnen mit einem Gemisch aus 30 g Xylol, 20 g n-8utanol und 35 g Solvesso® 150 und 5 g Ethoxypropylacetat wird auf die Spritzviskosität 21 Sekunden Auslaufzeit eingestellt.

Der Festkörper des vorstehenden Klarlackes beträgt 43,6 Gew.-%. Dies bedeutet gegenüber dem Stand der Technik von nur 40 Gew.-% Festkörper eine deutliche Verbesserung. Weitere Prüfungen des Klarlackes haben ergeben, daß dieser verbesserte Gebrauchseigenschaften besitzt. Der auf Prüfplatten aufgetragene Klarlack, nach dem Abtrocknen 30 Minuten auf 130°C erhitzt, ergab eine Pendelhärte von 128 Sekunden.

### Herstellung eines aminoplasthaltigen Klarlackes aus der Copolymerisatlösung 1:

In einem gereinigten, trockenen Behälter werden 400 g Gemisch aromatischer Kohlenwasserstoffe (Shellsol A Warenzeichen), 35 g Lichtschutzmittel (Handelsbezeichnung Tinuvin® 1130), 35 g Lichtschutzmittel (Handelsbezeichnung Tinuvin® 292) und 200 g Verlaufmittel (Handelsname Byk® 300 10%ig in Xylol) gründlich vermischt. Anschließend wird 6530 g Copolymerisatlösung 1 (zuvor von 80 Gew.-% Festkörper durch Zugabe von Butylacetat auf 75 Gew.-% Festkörper eingestellt), zugegeben und gründlich gemischt. Dann wird 2800g Melaminharz BE 683 dem Ansatz zugegeben und gründlich vermischt und sofort im DIN-4-Becher die Viskosität bestimmt. Durch Verdünnen mit einem Gemisch aus 30 g Xylol, 20 g n-Butanol und 35 g Solvesso® 150 und 5 g Ethoxypropylacetat wird auf die Spritzviskosität 21 Sekunden Auslaufzeit eingestellt.

Der Festkörper des vorstehenden Klarlackes beträgt 43,5 Gew.-%. Dies bedeutet gegenüber dem Stand der Technik von nur 40 Gew.-% Festkörper eine deutliche Verbesserung. Weitere Prüfungen des Klarlackes haben ergeben, daß dieser verbesserte Gebrauchseigenschaften besitzt. Der auf Prüfplatten aufgetragene Klarlack, nach dem Abtrocknen 30 Minuten auf 130°C erhitzt, ergab eine Pendelhärte von 170 Sekunden.

Beschreibung, die Beispiele, die Lacke und die experimentell ermittelten Daten zeigen, daß die eingangs genannten Aufgaben der Erfindung tatsächlich gelöst worden sind.

Bei der Herstellung der Copolymerisatlösungen und der Lacke wurden Handelsprodukte genannt, die hier näher erläutert werden:
Shellsol® A hat einen Siedebeginn bei 166°C.
Einen Aromatengehalt von 98 Vol.-%

Tinuvin® 1130 ist ein flüssiger UV-Absorber auf Basis eines Hydroxyphenylbenzotriazolderivates. Es ist das Reaktionsprodukt der folgenden 2 Komponenten, welches ein Durchschnittsmolekulargewicht von M_{W} > 600 hat.

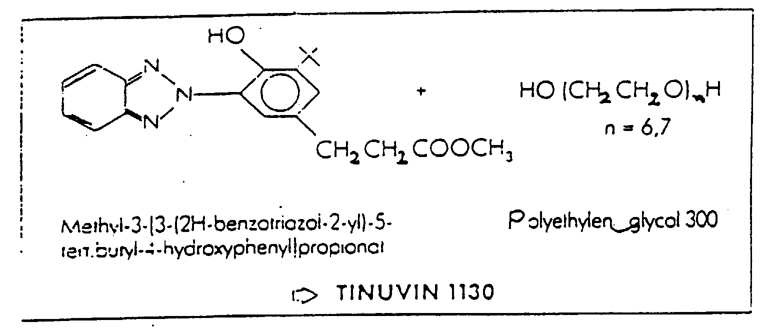

Tinuvin® 292 ist ein flüssiges Lichtschutzmittel. Chemisch wurde TINUVIN® 292 für die Lichtstabilisierung von Industrielacken entwickelt. TINUVIN® 292 gehört zu der Klasse der sterisch gehinderten Amine (HALS). Es hat den Vorteil, nicht empfindlich gegenüber säurekatalysierten Systemen zu sein, die als niedrig eingebrannte Autoreparaturlacke Verwendung finden.

BYK® -300 ist ein Additiv zur Erhöhung der Ritz- und Kratzfestigkeit und es basiert auf einer 50 %igen Lösung eines speziellen, lackverträglichen Polysiloxancopolymers. Hersteller ist die BYK-Chemie GmbH in D-4230 Wesel.

BYK® -344 ist ein Additiv zur Erhöhung der Ritz- und Kratzfestigkeit, welches eine 50 %ige Lösung eines speziellen, modifizierten, lackverträglichen Siloxancopolymers ist.

| | |
|---|---|
| Dichte bei 20°C (DIN 51757) | 0,93 - 0,95 g/cm³ |
| Refraktionszahl (DIN 53491) | 1,463 - 1,468 |
| Nichtflüchtige Anteile (ASTM D1644B) | 48 - 50 % |
| Lösemittel | Xylol/Isobutanol: 4/1 |
| Flammpunkt (DIN/ISO 3679) | 23°C |
| Aussehen | klare bis leicht trübe Flüssigkeit |

### Hersteller: BYK-Chemie GmbH

BYKETOL® -OK ist ein auf Basis eines Gemisches hochsiedender Aromaten, Ketone und Ester aufgebautes Verlaufadditiv.

| | |
|---|---|
| Dichte bei 20°C (DIN 51757) | 0,86 - 0,87 g/cm³ |
| Refraktionszahl (DIN 53491) | 1,468 - 1,474 |
| Flammpunkt (DIN/ISO 3679) | 42°C |
| Aussehen | klare bis leicht trübe Flüssigkeit |

### Hersteller: BYK-Chemie GmbH

Silicon - Intermediate SY 231 ist ein lösemittelfreies, reaktives, methoxy-funktionelles Polysiloxan mit enger Molekulargewichtsverteilung, niedrigen durchschnittlichem Molekulargewicht und einem sehr geringen Gehalt an flüchtigen Anteilen, Das Silicon-Intermediate SY 231 ist eine klare, leicht gelbliche Flüssigkeit mit einem Alkoxyequivalent 222, einem Gesamtsilicongehalt (alle Methoxylgruppen ersetzt durch Si-O-Si-Bindungen) 89 Gew.%, Viskosität bei 25°C 100-150 mm²/s, Dichte bei 25°C 1,14 g/ml, Brechnungsindex bei 25 °C 1,500-1,505, flüchtige Anteile (5g/1h/150 °C) 2 Gew.-%.

### Hersteller: Wacker-Chemie GmbH, 8000 München 22

BE 683 A ist ein n-butyliertes Melaminharz mit einem relativ hohen Festkörpergehalt von 75 % +-2, gelöst in n-Butanol. Seine Säurezahl (mg KOH/g) ist 0,1 max. Die Viskosität (Poise bei 25 °C) liegt zwischen 30 bis 60. Die "White spirit Toleranz" (ml/5g) beträgt zwischen 28 bis 60. Es zeichnet sich durch eine ausreichende Viskosität aus, um in Tankbehältern transportiert zu werden. Es besitzt einen weiten Verträglichkeitsbereich, hohe Reaktivität und gute Fließeigenschaften.
Hersteller: BIP Chemicals Ltd.
Popes Lane Oldbury, Warley West Midlands B 69 4 PD

Ein handelsübliches Produkt, welches aus Glycidylestern von
α - Alkylalkanmonocarbonsäure und/oder
α, α - Dialkylalkanmonocarbonsäuren besteht, ist Glydexx N-10 der Exxon Chemical, Houston Texas.

Es besteht im Wesentlichen aus Glycidyldecanoat mit einem
Minimal - Epoxy - Equivalent (g) 244 und einem
Maximal - Epoxy - Equivalent 256.

Gemäß den Herstellerangaben läßt es sich durch folgende Formel darstellen; 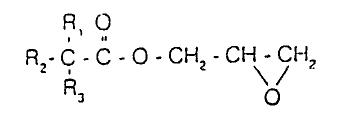 R₁, R₂ und R₃ stellen typisch eine oder mehrere Alkylgruppen dar, von denen jedoch mindestens eine oder auch mehrere eine Methylgruppe sein muß.

Cardura E10 ist im Cardura Technical Manual CA 1.1 als Glycidylester von Versatic 10, einer synthetischen gesättigten Monocarbonsäure mit hoch verzweigter Struktur mit 10 Kohlenstoffatomen (und der gleichen Formel wie bei Glydexx N-10 angegeben) mit der Summenformel C₁₃ H₂₄ O₃ beschrieben.

## Patentansprüche

1. Copolymerisatlösung, enthaltend inerte organische Lösungsmittel und Copolymerisate auf der Basis von Additionsprodukten α,β-ungesättigter Carbonsäure mit Glycidylestern und damit copolymerisierbaren α,β-ungesättigten Monomeren mit und ohne Hydroxylgruppen, wobei die Copolymerisatlösung die Komponenten
| | | |
|---|---|---|
| A) | 15,0 - 50,0 Gew.-% | von in der Lackindustrie üblichen inerten organischen Lösungsmittel, |
| B) | 50,0 - 85,0 Gew.-% | hydroxylgruppenhaltige Copolymerisate aufweist, die erhalten worden sind durch gleichzeitige Addition ,Kondensation und Polymerisation in inerten organischen Lösungsmitteln oder deren Gemische, die einen Siedebereich zwischen 150°C bis 200°C aufweisen, durch Erhitzen unter Rückflußkühlung in Anwesenheit von Polymerisationsinitiatoren, gegebenenfalls Kettenüberträgern, gegebenenfalls Carboxy-Epoxy-Katalysatoren von |
| a) | 10 bis 30 Gew.-% | Glycidylester von α-Alkylalkanmonocarbonsäuren und/oder α,α-Dialkylalkanmonocarbonsäuren, |
| b) | 5 bis 12 Gew.-% | Methacrylsäure, |
| c) | 10 bis 27 Gew.-% | Hydroxyalkylmethacrylat mit 1 bis 6 C-Atomen im Hydroxyalkylrest, |
| d) | 10 bis 38 Gew.-% | Styrol, |
| e) | 1 bis 5 Gew.-% | Polypropylenglycolmonomethacrylat mit einem mittleren Molekulargewicht von 350 bis 387, und |
| f) | 3 bis 20 Gew.-% | Alkylmethacrylat mit 1 bis 8 C-Atomen im Alkylrest, dadurch gekennzeichnet, daß die Monomeren mischung zusätzlich |
| g) | 9 bis 20 Gew.-% | lösemittelfreies, reaktives, methoxyfunktionales Polysiloxan enthält, wobei die Summe der Komponenten a, b, c, d, e, f und g jeweils 100 Gew.-% beträgt. |

2. Copolymerisatlösung nach Anspruch 1, dadurch gekennzeichnet, daß die Komponente B aus einem Copolymerisat besteht, welches aus Gemischen, bestehend aus
| | | |
|---|---|---|
| a) | 17 bis 25 Gew.-% | Glycidylester von α-Alkylalkanmonocarbonsäuren und/oder α,α-Dialkylalkanmonocarbonsäuren, |
| b) | 7 bis 12 Gew.-% | Methacrylsäure, |
| c) | 15 bis 26 Gew.-% | 2-Hydroxyethylmethacrylat, |
| d) | 17 bis 28 Gew.-% | Styrol, |
| e) | 1 bis 3 Gew.-% | Polypropylenglycolmonomethacrylat mit einem mittleren Molekulargewicht von 350 bis 387, |
| f) | 5 bis 15 Gew.-% | Methylmethacrylat, |
| g) | 12 bis 17 Gew.-% | lösemittelfreies, reaktives, methoxyfunktionelles Polysiloxan, wobei die Summe der Komponenten a, b, c, d, e, f und g jeweils 100 Gew.-% beträgt, hergestellt worden ist. |

3. Copolymerisatlösung nach Anspruch 1, dadurch gekennzeichnet, daß die Komponente B aus einem Copolymerisat besteht, welches aus einem Gemisch, bestehend aus
| | | |
|---|---|---|
| a) | 18 bis 24 Gew.-% | Glycidylester von α-Alkylalkanmonocarbonsäuren und/oder α,α-Dialkylalkanmonocarbonsäuren, |
| b) | 6 bis 12 Gew.-% | Methacrylsäure, |
| c) | 17 bis 22 Gew.-% | 2-Hydroxyethylmethacrylat, |
| d) | 20 bis 28 Gew.-% | Styrol, |
| e) | 1 bis 3 Gew.-% | Polypropylenglycolmonomethacrylat mit einem mittleren Molekulargewicht von 350 bis 387, |
| f) | 8 bis 12 Gew.-% | Methylmethacrylat, |
| 9) | 12 bis 17 Gew.-% | lösemittelfreies, reaktives, methoxyfunktionales Polysiloxan, wobei die Summe der Komponenten a, b, c, d, e, f und g jeweils 100 Gew.-% beträgt, hergestellt worden ist. |

4. Copolymerisatlösung nach Anspruch 1, dadurch gekennzeichnet, daß die Komponente B aus einem Copolymerisat besteht, welches aus Gemischen, bestehend aus
| | | |
|---|---|---|
| a) | 18 bis 22 Gew.-% | Glycidylester von α-Alkylalkanmonocarbonsäuren und/oder α,α Dialkylalkanmonocarbonsäuren, |
| b) | 7 bis 10 Gew.-% | Methacrylsäure, |
| c) | 19 bis 22 Gew.-% | 2-Hydroxyethylmethacrylat, |
| d) | 20 bis 28 Gew.-% | Styrol, |
| e) | 1 bis 3 Gew.-% | Polypropylenglycolmonomethacrylat mit einem mittleren Molekulargewicht von 350 bis 387, |
| f) | 9 bis 11 Gew.-% | Methylmethacrylat, |
| g) | 13 bis 17 Gew.-% | lösemittelfreies, reaktives, methoxyfunktionelles Polysiloxan, wobei die Summe der Komponenten a, b, c, d, e, f und g jeweils 100 Gew.-% beträgt, hergestellt worden ist. |

5. Copolymerisatlösung nach einem der Ansprüche 1 bis 4, dadurch gekennzeichnet, daß diese nach ihrer Herstellung aus
| | | |
|---|---|---|
| A) | 15,0 - 25,0 Gew.-%, | bevorzugt 15 bis 20 Gew.-%, von in der Lackindustrie üblichen inerten organischen Lösungsmitteln und |
| B) | 75,0 - 85,0 Gew.-% | hydroxylgruppenhaltigen Copolymerisaten besteht. |

6. Copolymerisatlösung nach einem der Ansprüche 1 bis 5, dadurch gekennzeichnet, daß als Carboxy-Epoxy-Katalysator 0,001 Gew.-% bis 0,5 Gew.-% mindestens einer Alkalimetallverbindung, bezogen auf das Gewicht der esterbildenden Komponenten enthalten ist.

7. Reaktionslacke zur Herstellung von Überzügen, welche als Bindemittel eine Copolymerisatlösung nach einem der Ansprüche 1 bis 6 und als Härter zwei- und/oder mehrwertiges Polyisocyanat enthalten.

8. Reaktionslacke nach Anspruch 7, die 60 bis 80 Gew.-% Copolymerisat als Bindemittel und 20 bis 40 Gew.-% zwei- und/oder mehrwertiges Polyisocyanat als Härter enthalten, wobei die Summe der beiden Komponenten 100 Gew.-% beträgt.

9. Reaktionslacke nach Anspruch 7 oder 8, die 1 bis 10 Gew.-% reaktive Aminoplastharze als zusätzlichen Härter enthalten.

10. Einbrennlacke zur Herstellung von Überzügen, welche als Bindemittel eine Copolymerisatlösung nach einem der Ansprüche 1 bis 6 und als Härter mindestens ein reaktives Aminoplastharz enthält.

11. Einbrennlacke nach Anspruch 10, die 60 bis 90 Gew.-% Copolymerisat als Bindemittel und 10 bis 40 Gew.-% reaktives Aminoplastharz enthalten.

12. Verfahren zur Herstellung der hydroxylgruppenhaltigen Copolymerisatlösungen gemäß einem der Ansprüche 1 bis 6, gekennzeichnet durch Erhitzen eines Gemisches, bestehend aus der Komponente A und den Monomeren der Komponente B, wobei der Siedepunkt der Komponente A so bemessen vorliegt, daß am Ende der Umsetzung die Copolymerisate mit dem gewünschten Festkörper in der Komponente A vorliegen, als Vorlage, in die bei Polymerisationstemperatur entsprechend dem Fortschritt der Polymerisation und gleichzeitig ablaufenden Addition und Kondensation als Zulauf, man die erforderlichen Monomeren a, b, c, d, e, f und Komponente g, Polymerisationsinitiatoren, gegebenenfalls Kettenüberträger, gegebenenfalls Carboxy-Epoxy-Katalysatoren, allmählich einlaufen läßt und nach Beendigung des Zulaufs - falls erforderlich - noch auf Polymerisationstemperatur hält, bis durch Nachpolymerisation die Umsetzung beendet ist.

13. Verfahren nach Anspruch 12, dadurch gekennzeichnet, daß die Komponente A einen Siedebereich zwischen 180°C und 200°C aufweist und als Vorlage auf Rückflußtemperatur gehalten wird und der Zulauf gleichmäßig im Verlauf von 12 bis 20 Stunden zudosiert wird und nach Zulauf-Ende weiter auf Rückflußtemperatur gehalten wird bis die Copolymerisation beendet ist, wobei die Rückflußtemperatur bis auf etwa 140°C absinken kann.

14. Verfahren nach einem der Ansprüche 12 bis 13, dadurch gekennzeichnet, daß die Komponente A in einer Menge von 15 bis 25 Gew.-%, bevorzugt 15 bis 20 Gew.-%, eingesetzt wird.

15. Verfahren nach einem der Ansprüche 12 bis 14, dadurch gekennzeichnet, daß als Carboxy-Epoxy-Katalysator 0,001 Gew.-% bis 0,5 Gew.-% mindestens einer Alkalimetallverbindung, bezogen auf das Gewicht der esterbildenden Komponenten, eingesetzt wird.

## Claims

1. Copolymer solution comprising inert organic solvents and copolymers based on addition products of α,β-unsaturated carboxylic acid with glycidyl esters and α,β-unsaturated monomers which are copolymerizable therewith and include monomers with and without hydroxyl groups, the said copolymer solution comprising the following components:
| | | |
|---|---|---|
| A) | 15.0 - 50.0% by weight | of inert organic solvents customary in the coatings industry, |
| B) | 50.0 - 85.0% by weight | of hydroxyl-containing copolymers |
| | obtained by simultaneous addition, condensation and polymerization in inert organic solvents or mixtures thereof, which have a boiling range of from 150 to 200°C, by heating | |
| a) | from 10 to 30% by weight | of glycidyl esters of α-alkylalkanemonocarboxyl ic acids and/or α,α-dialkylalkanemonocarboxylic acids, |
| b) | from 5 to 12% by weight | of methacrylic acid, |
| c) | from 10 to 27% by weight | of hydroxyalkyl methacrylate with 1 to 6 carbon atoms in the hydroxyalkyl radical, |
| d) | from 10 to 38% by weightof | styrene, |
| e) | from 1 to 5% by weight | of polypropylene glycol monomethacrylate having an average molecular weight of from 350 to 387, and |
| f) | from 3 to 20% by weight | of alkyl methacrylate with 1 to 8 carbon atoms in the alkyl radical |
| with reflux cooling in the presence of polymerization initiators and, if desired, chain transfer agents and, if desired, carboxy-epoxy catalysts, characterized in that the monomer mixture additionally comprises | | |
| g) | from 9 to 20% by weight | of solvent-free, reactive, methoxy-functional polysiloxane, the sum of components a, b, c, d, e, f and g being in each case 100% by weight. |

2. Copolymer solution according to Claim 1, characterized in that component B consists of a copolymer prepared from mixtures consisting of
| | | |
|---|---|---|
| a) | from 17 to 25% by weight | of glycidyl esters of α-alkylalkanemonocarboxylic acids and/or α,α-dialkylalkanemonocarboxylic acids, |
| b) | from 7 to 12% by weight | of methacrylic acid, |
| c) | from 15 to 26% by weight | of 2-hydroxyethyl methacrylate, |
| d) | from 17 to 28% by weight | of styrene, |
| e) | from 1 to 3% by weight | of polypropylene glycol monomethacrylate having an average molecular weight of from 350 to 387, |
| f) | from 5 to 15% by weight | of methyl methacrylate, |
| g) | from 12 to 17% by weight | of solvent-free, reactive, methoxy-functional polysiloxane, the sum of components a, b, c, d, e, f and g being in each case 100% by weight. |

3. Copolymer solution according to Claim 1, characterized in that component B consists of a copolymer prepared from a mixture consisting of
| | | |
|---|---|---|
| a) | from 18 to 24% by weight | of glycidyl esters of α-alkylalkanemonocarboxylic acids and/or α,α-dialkylalkanemonocarboxylic acids, |
| b) | from 6 to 12% by weight | of methacrylic acid, |
| c) | from 17 to 22% by weight | of 2-hydroxyethyl methacrylate, |
| d) | from 20 to 28% by weight | of styrene, |
| e) | from 1 to 3% by weight | of polypropylene glycol monomethacrylate having an average molecular weight of from 350 to 387, |
| f) | from 8 to 12% by weight | of methyl methacrylate, |
| g) | from 12 to 17% by weight | of solvent-free, reactive, methoxy-functional polysiloxane, the sum of components a, b, c, d, e, f and g being in each case 100% by weight. |

4. Copolymer solution according to Claim 1, characterized in that component B consists of a copolymer prepared from mixtures consisting of
| | | |
|---|---|---|
| a) | from 18 to 22% by weight | of glycidyl esters of αalkylalkanemonocarboxylic acids and/or α,α-dialkyl- |
| | | alkanemonocarboxylic acids, |
| b) | from 7 to 10% by weight | of methacrylic acid, |
| c) | from 19 to 22% by weight | of 2-hydroxyethyl methacrylate, |
| d) | from 20 to 28% by weight | of styrene, |
| e) | from 1 to 3% by weight | of polypropylene glycol monomethacrylate having an average molecular weight of from 350 to 387, |
| f) | from 9 to 11% by weight | of methyl methacrylate, |
| g) | from 13 to 17% by weight | of solvent-free, reactive, methoxy-functional polysiloxane, the sum of components a, b, c, d, e, f and g being in each case 100% by weight. |

5. Copolymer solution according to one of Claims 1 to 4, characterized in that following its preparation it consists of
| | | |
|---|---|---|
| A) | 15.0 - 25.0% by weight, | preferably from 15 to 20% by weight, of inert organic solvents customary in the coatings industry and |
| B) | 75.0 - 85.0% by weight | of hydroxyl-containing copolymers. |

6. Copolymer solution according to one of Claims 1 to 5, characterized in that from 0.001 to 0.5% by weight of at least one alkali metal compound, based on the weight of the ester-forming components, is present as carboxy-epoxy catalyst.

7. Reactive coating materials for producing coatings, which comprise as binder a copolymer solution according to one of Claims 1 to 6 and as curing agent difunctional and/or polyfunctional polyisocyanate.

8. Reactive coating materials according to Claim 7, which comprise from 60 to 80% by weight of copolymer as binder and from 20 to 40% by weight of difunctional and/or polyfunctional polyisocyanate as curing agent, the sum of the two components being 100% by weight.

9. Reactive coating materials according to Claim 7 or 8, which comprise from 1 to 10% by weight of reactive amino resins as additional curing agent.

10. Stoving enamels for producing coatings, which comprise as binder a copolymer solution according to one of Claims 1 to 6 and as curing agent at least one reactive amino resin.

11. Stoving enamels according to Claim 10, which comprise from 60 to 90% by weight of copolymer as binder and from 10 to 40% by weight of reactive amino resin.

12. Process for preparing the hydroxyl-containing copolymer solutions according to one of Claims 1 to 6, characterized by heating a mixture consisting of component A and the monomers of component B, the boiling point of component A being such that at the end of the reaction the copolymers are present in component A with the desired solids content, as an initial charge into which the required monomers a, b, c, d, e, f and component g, polymerization initiators, chain transfer agents if desired, and carboxy-epoxy catalysts if desired are gradually run in as a feed stream at the polymerization temperature, in accordance with the progress of the polymerization and simultaneous addition and condensation, and after the end of the feed stream - if necessary - the batch is held at polymerization temperature until by virtue of post-polymerization the reaction is at an end.

13. Process according to Claim 12, characterized in that component A has a boiling range of between 180°C and 200°C and is held at reflux temperature as the initial charge, and the feed stream is metered in at a uniform rate over the course of from 12 to 20 hours, and after the end of the feed stream the batch is maintained at reflux temperature until the copolymerization is at an end, it being possible for the reflux temperature to fall to about 140°C.

14. Process according to either of Claims 12 and 13, characterized in that component A is employed in an amount of from 15 to 25% by weight, preferably from 15 to 20% by weight.

15. Process according to one of Claims 12 to 14, characterized in that from 0.001 to 0.5% by weight of at least one alkali metal compound, based on the weight of the ester-forming components, is employed as carboxy-epoxy catalyst.

## Revendications

1. Solution de copolymères, contenant des solvants organiques inertes et des copolymères à base de produits d'addition d'acides carboxyliques α,β-insaturés et d'esters glycidyliques et de monomères α,β-insaturés portant ou non des groupes hydroxyle et copolymérisables avec ceux-ci, laquelle solution de copolymères contient les composants suivants :
A) de 15,0 à 50,0 % en poids de solvants organiques utilisés habituellement dans l'industrie des vernis,
B) de 50,0 à 85,0 % en poids de copolymères portant des fonctions hydroxyle obtenus par réaction d'addition, de condensation et de polymérisation, dans des solvants inertes ou des mélanges de solvants inertes ayant un point d'ébullition compris entre 150 °C et 200 °C, par chauffage avec refroidissement par reflux en présence d'amorceurs de polymérisation, éventuellement en présence d'agents de transfert de chaîne, et éventuellement en présence de catalyseurs carboxy-époxy,
(a) de 10 à 30 % en poids d'esters glycidyliques d'acides α-alkylalcanemonocarboxyliques et/ou d'acides α,α-dialkylalcanedicarboxyliques,
(b) de 5 à 12 % en poids d'acide méthacrylique,
(c) de 10 à 27 % en poids de méthacrylate d'hydroxyalkyle dont le résidu hydroxyalkyle contient de 1 à 6 atomes de carbone,
(d) de 10 à 38 % en poids de styrène,
(e) de 1 à 5 % en poids de monométhacrylate de polypropylèneglycol ayant une masse molaire moyenne comprise entre 350 et 387, et
(f) de 3 à 20 % en poids de méthacrylate d'alkyle dont le résidu alkyle contient de 1 à 8 atomes de carbone,
caractérisée par le fait que le mélange de monomères contient en outre (g) de 9 à 20 % en poids d'un polysiloxane réactif à fonctions méthoxy exempt de solvant,
la somme des composants (a), (b), (c), (d), (e), (f) et (g) étant égale à 100 % en poids.

2. Solution de copolymères selon la revendication 1, caractérisée par le fait que le composant B est constitué d'un copolymère préparé à partir d'un mélange comprenant
(a) de 17 à 25 % en poids d'esters glycidyliques d'acides α-alkyl-alcanemonocarboxyliques et/ou d'acides α,α-dialkylalcanedicarboxyliques,
(b) de 7 à 12 % en poids d'acide méthacrylique,
(c) de 15 à 26 % en poids de méthacrylate de 2-hydroxyéthyle,
(d) de 17 à 28 % en poids de styrène,
(e) de 1 à 3 % en poids de monométhacrylate de polypropylèneglycol ayant une masse molaire moyenne comprise entre 350 et 387, et
(f) de 5 à 15 % en poids de méthacrylate de méthyle, et
(g) de 12 à 17 % en poids d'un polysiloxane réactif à fonctions méthoxy exempt de solvant,
la somme des composants (a), (b), (c), (d), (e), (f) et (g) étant égale à 100 % en poids.

3. Solution de copolymères selon la revendication 1, caractérisée par le fait que le composant B est un copolymère préparé à partir d'un mélange comprenant
(a) de 18 à 24 % en poids d'esters glycidyliques d'acides α-alkylalcanemonocarboxyliques et/ou d'acides α,α-dialkylalcane-dicarboxyliques,
(b) de 6 à 12 % en poids d'acide méthacrylique,
(c) de 17 à 22 % en poids de méthacrylate de 2-hydroxyéthyle, (d) de 20 à 28 % en poids de styrène,
(e) de 1 à 3 % en poids de monométhacrylate de polypropylèneglycol ayant une masse molaire moyenne comprise entre 350 et 387, et
(f) de 8 à 12 % en poids de méthacrylate de méthyle, et
(g) de 12 à 17 % en poids d'un polysiloxane réactif à fonctions méthoxy exempt de solvant,
la somme des composants (a), (b), (c), (d), (e), (f) et (g) étant égale à 100 % en poids.

4. Solution de copolymères selon la revendication 1, caractérisée par le fait que le composant B est un copolymère préparé à partir d'un mélange comprenant
(a) de 18 à 22 % en poids d'esters glycidyliques d'acides α-alkylalcanemonocarboxyliques et/ou d'acides α,α-dialkylalcanedicarboxyliques,
(b) de 7 à 10 % en poids d'acide méthacrylique,
(c) de 19 à 22 % en poids de méthacrylate de 2-hydroxyéthyle,
(d) de 20 à 28 % en poids de styrène,
(e) de 1 à 3 % en poids d'un monométhacrylate de polypropylèneglycol ayant une masse molaire moyenne comprise entre 350 et 387, et
(f) de 9 à 11 % en poids de méthacrylate de méthyle, et
(g) de 13 à 17 % en poids d'un polysiloxane réactif à fonctions méthoxy exempt de solvant,
la somme des composants (a), (b), (c), (d), (e), (f) et (g) étant égale à 100 % en poids.

5. Solution de copolymères selon une des revendications 1 à 4, caractérisée par le fait qu'elle est constituée, après préparation,
A) de 15,0 - 25,0 % en poids, de préférence de 15 à 20 % en poids, de solvants organiques inertes utilisés habituellement dans l'industrie des vernis, et
B) de 75,0 à 85,0 % en poids de copolymères portant des groupes hydroxyle.

6. Solution de copolymères selon une des revendications 1 à 5, caractérisée par le fait qu'elle contient comme catalyseur carboxy-époxy, de 0,001 à 0,5 % en poids, rapporté au poids des composants formant des esters, d'au moins un composé d'un métal alcalin.

7. Vernis réactifs pour la fabrication de revêtements, contenant, comme liant, une solution de copolymères selon l'une des revendications 1 à 6 et, en tant qu'agent de durcissement, un polyisocyanate di- et/ou polyfonctionnel.

8. Vernis réactifs selon la revendication 7, contenant de 60 à 80 % en poids de copolymère, en tant que liant, et de 20 à 40 % en poids d'un polyisocyanate di- et/ou polyfonctionnel jouant le rôle d'agent de durcissement, la somme des deux composants étant égale à 100 %.

9. Vernis réactifs selon la revendication 7 ou 8 contenant de 1 à 10 % en poids de résines réactives de type aminoplastes jouant le rôle d'agent de durcissement supplémentaire.

10. Vernis à cuire pour la fabrication de revêtements, contenant, comme liant une solution de copolymères selon une des revendications 1 à 6 et, en tant que liant, au moins une résine réactive de type aminoplaste.

11. Vernis à cuire selon la revendication 10, contenant de 60 à 90 % en poids d'un copolymère jouant le rôle de liant, et de 10 à 40 % en poids d'une résine réactive de type aminoplaste.

12. Procédé pour la préparation de solutions de copolymères portant des fonctions hydroxyle selon l'une des revendications 1 à 6, caractérisé par le fait que l'on chauffe un mélange de départ composé du composant A et des monomères du composant B, le point d'ébullition du composant A étant tel qu'à la fin de la réaction, les copolymères soient présents dans le composant A avec une teneur en matières solides désirée, mélange dans lequel on fait couler progressivement, à la température de polymérisation et au fur et à mesure que la polymérisation se déroule en même temps que les réactions d'addition et de condensation, les monomères a, b, c, d, e, f nécessaires et le composant g, les amorceurs de polymérisation, éventuellement les agents de transfert de chaîne, éventuellement les catalyseurs époxy-carboxy, et que l'on maintient éventuellement - si nécessaire - à la fin de l'addition le mélange à la température de polymérisation jusqu'à ce que la réaction de postpolymérisation soit terminée.

13. Procédé selon la revendication 12, caractérisé par le fait que le composant A a un point d'ébullition compris entre 180 et 200 °C, et est maintenu, en tant que mélange de départ, à sa température de reflux, que l'addition se fait régulièrement sur une période de 12 à 20 heures, et qu'à la fin de l'addition le mélange est maintenu à la température de reflux jusqu'à ce que la copolymérisation soit terminée, étape pendant laquelle la température de reflux peut diminuer jusqu'à une valeur d'environ 140 °C.

14. Procédé selon une des revendications 12 à 13, caractérisé en ce que le composant A est utilisé en une quantité comprise entre 15 et 25 % en poids, de préférence entre 15 et 20 % en poids.

15. Procédé selon une des revendications 12 à 14, caractérisé en ce que l'on utilise, comme catalyseur carboxy-époxy, de 0,001 à 0,5 % en poids, rapporté au poids des composants formant des esters, d'au moins un composé de métal alcalin.
